# EUROPÄISCHE PATENTSCHRIFT

(11) **EP 3 140 688 B1**
(45) Veröffentlichungstag und Bekanntmachung des Hinweises auf die Patenterteilung: **03.07.2024**
(21) Anmeldenummer: 15718930.9
(22) Anmeldetag: 30.04.2015
(51) Int. Cl.: G02B 6/26

(54) **LICHTLEITER MIT ANGEFORMTEM OPTISCHEN ELEMENT**
OPTICAL WAVEGUIDE HAVING A MOLDED-ON OPTICAL ELEMENT
GUIDE D'ONDES OPTIQUES MUNI D'UN ÉLÉMENT MOULÉ

(30) Priorität: 09.05.2014 DE 102014208756
(43) Veröffentlichungstag der Anmeldung: 15.03.2017
(73) Patentinhaber: SCHOTT AG, 55122 Mainz (DE)
(72) Erfinder: SCHULTHEIS, Bernd, 55270 Schwabenheim an der Sel (DE); WEINGÄRTNER, Thomas, 55435 Gau-Algesheim (DE); WERNER, Holger, 73770 Denkendorf (DE)
(74) Vertreter: Blumbach · Zinngrebe Patentanwälte PartG mbB
(86) Internationale Anmeldenummer: PCT/EP2015/059511
(87) Internationale Veröffentlichungsnummer: WO 2015/169685

(56) Entgegenhaltungen:
- EP-A1- 2 600 181
- EP-A2- 1 672 755
- DE-U1- 9 207 943
- US-A- 5 271 073

## Beschreibung

Die Erfindung betrifft Lichtleiter im Allgemeinen, insbesondere auch starre faseroptische Lichtleiter, mit angeformten optischen Elementen aus hoch transparentem Kunststoff sowie deren Anwendungen.

Starre faseroptische Lichtleiter sind aus dem Stand der Technik als Dentalstäbe bekannt. Diese werden i.A. durch Ausziehen von Glasstäben oder einem Bündel aus Kern-Mantelstäben hergestellt. Diese können u.a. mit einem Kunststoff als Hülse umspritzt werden. Als Kunststoff wird hier ein schwarzer, opaker, in der Regel Glasfaser-verstärkter PPS-Kunststoff (z.B. FORTRON der Firma TICONA) verwendet. Diese Montagehülsen dienen zur passgenauen Aufnahme des Dentalstabs in einem Handstück, welches die Lichtquelle umfasst.

Diese Hülsen umgeben Teilbereiche der Außenumfangsfläche des Lichtleiters, die Stirnfläche des Lichtleiters aus Glas liegt frei. Das Emissionsprofil von in dem Lichtleiter geleiteter elektromagnetischer Strahlung wird demzufolge hauptsächlich von Geometrie und Brechungsindex des Glases des Lichtleiters bestimmt. Werden davon abweichende Emissionsprofile benötigt, z.B. um eine zusätzliche Fokussierung und/oder Homogenisierung des Lichts zu erzielen, werden weitere optische Systeme benötigt, die an den Lichtleiter angesetzt werden müssen. insbesondere für medizinische oder kosmetische Anwendungen besteht daraus das Problem, dass der Lichtleiter hygienisch zu reinigen sein und daher sterilisierbar und/oder autoklavierbar sein muss. Mit bekannten Linsensystemen, die Fassungen der Linsen, Verkittungen der Linsen und Aufnahmen für die Montage auf den Lichtleiter beinhalten, ist diese Anforderung höchstens mit sehr großem Aufwand zu erfüllen.

Die DE 10 2012 100 375 A1 beschreibt einen Lichtleiter, dessen optische Eigenschaften durch die Verwendung von flüssigen Polymeren angepasst werden. Über der Lichtaustrittsfläche kann sich insbesondere ein Bereich mit diesen flüssigen Polymeren befinden, welche von einer Verschlusskappe abgeschlossen werden. Ein solcher Lichtleiter widersteht nur schwierig mechanischen Belastungen, insbesondere weil bei Abziehen der Verschlusskappe die flüssigen Polymere austreten können.

Die EP 2 600 181 A1 beschreibt ein Verfahren zum Koppeln eines optischen Konversionselements mit einem Glasfaserbündel, wobei eine Hülse mit einer Vergussmasse vorgesehen ist.

Die EP 1 672 755 A2 beschreibt eine Lichtemittierende Vorrichtung mit einer Erregerlichtquelle und einem Lichtwellenleiter, der Erregerlicht übertragen kann, sowie ein Lichtwellenleiter-Endelement mit einem Umwandlungselement, um die Wellenlänge des Erregerlichts umzuwandeln und Licht mit einem vorbestimmten Wellenlängenband abzugeben.

Die DE 92 07 943 U1 beschreibt eine Vorrichtung zur Bearbeitung von Lichtwellenleiter-Endflächen.

Schließlich beschreibt die US 5,271,073 A einen faseroptischen Sensor.

Vor diesem Hintergrund ist es die Aufgabe der Erfindung, einen Lichtleiter aus Glas für industrielle, medizinische oder kosmetische Anwendungen zur Verfügung zu stellen, dessen optische Funktionen auf einfache aber widerstandsfähige Weise erweiterbar sind, mit verbesserter Haftung und damit hohen Abzugskräften und mit sehr guter Autoklavierbeständigkeit, sowie ein Verfahren zu dessen Herstellung und besonders vorteilhafte Anwendungen anzugeben.

Gelöst wird die Aufgabe durch einen Lichtleiter mit angeformtem optischen Element für industrielle, medizinische oder kosmetische Anwendungen gemäß den Merkmalen des Anspruchs 1. Gegenstand der Erfindung ist ferner ein Verfahren zum Herstellen eines temperaturbeständigen Lichtleiters mit angeformtem optischen Element gemäß den Merkmalen des Anspruchs 14. Bevorzugte Ausführungen ergeben sich aus den davon abhängigen Ansprüchen.

Ein erfindungsgemäßer Lichtleiter weist eine Außenumfangsfläche und zumindest eine Stirnfläche auf. Üblicherweise ist der Lichtleiter ein schmales und langes Gebilde. Er besteht i.d.R. zumindest in seinem Kern aus Glas, einschließlich einer Mehrzahl von Faserstäben aus verschiedenen Glaszusammensetzungen. Der Lichtleiter kann als starrer Lichtleiter in Form eines Faserstabs oder Lichtleitstabs oder als flexibler Lichtleiter ausgeführt sein, deren Lichtein- und /oder Austrittsflächen verklebt oder heißverschmolzen sind. Der Bereich des Lichtleiters, der aus Glas besteht, endet in einer Stirnfläche aus Glas. An diese Stirnfläche aus Glas ist ein optisches Element aus zumindest einem transparenten Kunststoff angeformt, so dass die im Betriebszustand in dem Lichtleiter geleitete elektromagnetischer Strahlung durch die Stirnfläche aus Glas in den transparenten Kunststoff des optischen Elements geleitet wird und wieder aus diesem austritt. Das angeformte optische Element formt die durch das Element im Betriebszustand hindurchtretende Strahlung und bestimmt somit das Emissionsprofil des erfindungsgemäßen Lichtleiters.

Die Erfinder haben erkannt, dass sich die Aufgabe auf überraschend einfache Weise dadurch lösen lässt, dass eine unmittelbare Anformung des optischen Elementes aus Kunststoff an die Stirnfläche aus Glas erfolgt. Dadurch werden hohe Abzugskräfte des optischen Elements ermöglicht, so dass eine dauerhafte und mechanisch belastbare Verbindung zwischen Stirnfläche und optischem Element besteht. Transparent heißt im

Sinne der Erfindung, dass der Kunststoff des optischen Elements durchlässig für die im Betriebszustand in dem Lichtleiter geleitete elektromagnetische Strahlung ist. Insbesondere werden vorteilhaft Transmissionswerte des optischen Elements von mindestens 90% oder mehr eingesetzt, die hauptsächlich durch die Auswahl der Kunststoffe erreicht werden.

Der Kunststoff der angeformten optischen Elemente ist vorteilhaft ausgewählt aus der Gruppe der Flüssig-Silikon-Kautschuke (engl. Liquid Silicone Rubber, abgekürzt LSR), insbesondere der heißvernetzenden Flüssig-Silikon-Kautschuke. Diese weisen eine hohe Transparenz und eine hohe Temperaturbeständigkeit auf. Die Abzugskräfte des optischen Elements von der Stirnfläche des Lichtleiters aus Glas betragen vorteilhaft mehr als 80 N, insbes. mehr als 100 N. Insbesondere ist das optische Element unlösbar mit der Stirnfläche des Lichtleiters auf Glas verbunden, d.h. beim Abziehen des optischen Elements von der Stirnfläche wird der Lichtleiter beschädigt oder sogar zerstört.

Grundsätzlich sind auch andere hochtransparente und temperaturstabile Kunststoffe zum Anformen derartiger optischer Elemente geeignet, wobei allerdings das Schrumpfverhalten und die Haftung zum Glas entscheidend sind. PC oder PMMA weisen zwar sehr gute optische Eigenschaften auf, besitzen aber eine eher geringe chemische Beständigkeit und Temperaturbeständigkeit. Ein transparenter Thermoplast, wie Polyetherimid (PEI, z.B. ULTEM von GE Plastics) wäre zwar im Hinblick auf die erforderliche Autoklavierbeständigkeit geeignet, besitzt aber eine bernsteinfarbige Eigenfarbe und ist zudem schwer zu verarbeiten. Aufgrund der Dauerelastizität sind Silikone bevorzugt.

Das optische Element aus transparentem Kunststoff ist im Sinne der Erfindung direkt an die Stirnfläche aus Glas angeformt, es existiert also eine Grenzfläche zwischen Stirnfläche und Eingangsfläche des optischen Elements und somit eine Grenzfläche zwischen Glas und Kunststoff. Insbesondere ist das optische Element form- und stoffschlüssig mit der Stirnfläche verbunden. Um die mechanische Stabilität zu erhöhen befindet sich auf der Glasoberfläche des Lichtleiters, insbesondere auf der Stirnfläche aus Glas, ein Haftvermittler, so dass eine Grenzflächenfolge Glas zu Haftvermittler zu transparentem Kunststoff existiert und/oder es ist eine physikalische und/ oder chemische Oberflächenvorbehandlungen der Glasoberfläche vorgesehen, die insbesondere die Oberfläche aktivieren und eine hohe Oberflächenenergie erzeugen. Derartige Verfahren sind u.a. eine Corona-Entladung, eine Plasma-Vorbehandlung, z.B. Atmosphärendruck-Plasma, oder auch ein Anätzen der Oberfläche. Die Vorbehandlung wird insbesondere vor dem Aufbringen des Haftvermittlers und/oder vor dem Anformen des optischen Elements erfolgen.

Das optische Element aus transparentem Kunststoff ist so ausgebildet, dass es über die Stirnfläche aus Glas hinüber auskragt und zumindest Bereiche der Außenumfangsfläche des Lichtleiters bedeckt. Ebenso ist eine komplette Überdeckung des Lichtleiters denkbar. Dadurch wird die Kontaktfläche zwischen optischem Element und Lichtleiter aus Glas erhöht, wodurch eine verbesserte Haftung und höhere Abzugskräfte erreicht werden können.

Das optische Element hat wie beschrieben die Aufgabe, die im Betriebszustand durch das Element hindurchtretende elektromagnetische Strahlung zu formen. Insbesondere kann es als Sammellinse oder als Streulinse und/oder als Lichtmischer fungieren. Durch eine Kombination von verschiedenen transparenten Kunststoffen, insbesondere einer schichtweisen Kombination von transparenten Kunststoffen unterschiedlicher Brechungsindices, können die strahlformenden und/oder mischenden Eigenschaften des optischen Elements gezielt eingestellt werden.

Ebenso ist es möglich, dass das optische Element zumindest bereichsweise von einem Abdeckelement aus einem vom transparenten Kunststoff des optischen Elements verschiedenen Kunststoff bedeckt ist. Dieses kann dann z.B. als Schutz des transparenten Kunststoffs z.B. vor mechanischen Beschädigungen dienen und/oder seitlichen Lichtaustritt verhindern.

Bevorzugt ist eine Ausführungsform, in der die Außenumfangsfläche des Lichtleiters Strukturen aufweist, sog. Hinterschnitt-Bereiche, die in angeformte Strukturen des optischen Elements und/oder des Abdeckelements greifen. Dadurch kann das optische Element sozusagen mit dem Lichtleiter verrasten, wodurch bevorzugt die Abzugskraft des optischen Elements vom Lichtleiter abermals erhöht wird.

Besonders bevorzugt wird der Lichtleiter von einem Glasstab oder einer Mehrzahl von miteinander unlösbar verbundenen Glasstäben gebildet, wobei die Glasstäbe bevorzugt Kern-Mantelstäbe sind. Kern-Mantelstäbe sind üblicherweise Glasstäbe mit einem Kern aus einem Glas, das von einem Mantel aus Glas umgeben ist, welches einen niedrigeren Brechungsindex als das Glas des Kerns aufweist.

Ein erfindungsgemäßes Verfahren zum Herstellen eines zuvor beschriebenen Lichtleiters beinhaltet die folgenden Verfahrensschritte: Es wird ein Lichtleiter mit zumindest einem Leitungsbereich aus Glas bereit gestellt, der eine Stirnfläche aus Glas aufweist, es wird eine Spritzgussform bereit gestellt, welche die negative Kontur des optischen Elements enthält, es wird zumindest ein Kunststoff-Precursor bereitgestellt, aus dem das optische Element nach Aushärtung des Kunststoff-Precursors gebildet wird, es wird zumindest die Stirnfläche des Lichtleiters in die Spritzgussform eingebracht und es wird das optische Elements aus Kunststoff mittels reaktivem Spritzgießen angeformt, wobei zumindest die Stirnfläche des Lichtleiters mit dem zumindest einen Kunststoff-Precursor bedeckt wird und nach Aushärten des Kunststoff-Precursors das optische Element entsteht.

Wie beschrieben wird als Kunststoff bevorzugt LSR verwendet. Das Verfahren des reaktiven Spritzgießens ist bekannt. Überraschend ist, dass es für die Herstellung eines optischen Elements mit einer direkten abzugsfesten Verbindung zu einem Glaslichtleiter einsetzbar ist.

In einer Ausgestaltung des Verfahrens wird ein Haftvermittler auf zumindest Teilbereiche der Bereiche des Lichtleiters aufgebracht, die mit dem Kunststoff des optischen Elements bedeckt werden, bevor das optische Element an die Stirnfläche des Lichtleiters angeformt wird. Der Haftvermittler, auch Primer oder Haftreiniger genannt, ist besonders vorteilhaft als Polysilan- oder Silan-Verbindung ausgeführt. Mittels dieser Vorbehandlung wird erreicht, dass zum einen die Oberfläche gereinigt und insbesondere Fett- oder Schmutzschichten entfernt werden und zum anderen die Glasoberfläche chemisch vorkonditioniert wird, so dass neben einem reinen Formschluss auch eine chemische Verbindung zwischen den Si-O-Bindungen im Glas und den Si-OH-Gruppen im Silikon entstehen kann. Wie bereits beschrieben sind auch chemische und/ oder physikalische Vorbehandlungsmethoden eingesetzt, mit denen die Glasoberfläche aktiviert wird. Neben der Beseitigung von Wasserfilmen und organischen Verunreinigungen, wird die Oberfläche zusätzlich aktiviert, um einen guten Haftungsverbund zu erzielen.

In einer Verfahrensvariante kann auch vorgesehen sein, dass das optische Element statt mittels Spritzgießens mittels eines Tauchbeschichtungsverfahrens an den Lichtleiter angeformt wird. Dabei ist vorgesehen, dass der Lichtleiter in eine Gießform mit dem Flüssigsilikon eingetaucht und anschließend getempert wird. Hiermit können insbesondere dünne Überzüge auf dem Lichtleiter hergestellt werden. Auch hierbei kann vorgesehen sein, die Oberfläche des Lichtleiters zumindest bereichsweise mit einem Haftvermittler vorzubehandeln.

Bevorzugt wird der erfindungsgemäße Lichtleiter in einem Dentalbeleuchtungsgerät eingesetzt, insbesondere einem Dentalaushärtegerät, einem Gerät zur Aushärtung von industriell anwendbaren Klebern, z.B. im Bereich der Elektronik, oder in einem Dental-Handstück, z.B. als Bestandteil einer Turbine. Es sind auch Anwendungen im Bereich Hals-, Nasen- oder Ohrenmedizin denkbar.

Darüber hinaus sind auch Anwendungen im Beleuchtungsbereich, z.B. für Vitrinen-Beleuchtungen oder für Möbelleuchten denkbar, bei denen starre oder flexible Lichtleiter mit einem optischen Element an der Lichtaustrittsfläche versehen sind.

Eine besonders kostengünstige Variante eines Lichtleiters mit angeformtem optischen Element kann realisiert werden, wenn der Faser- oder Lichtleitstab lediglich gesägt und gegebenenfalls geschliffen und anschließend auf diese sägerauhe Oberfläche das optische Element aus Flüssigsilikon angeformt wird. Durch eine möglichst gute Anpassung der Brechungsindices des Lichtleiters und des optischen Elements (Index-Matching) können die Strukturen der gesägten bzw. geschliffenen Faser- oder Lichtleitstaboberfläche optisch nahezu geglättet werden, ohne dass ein aufwendiger Polierschritt erforderlich ist. Damit können insbesondere auch Low-Cost-Anwendungen adressiert werden. Die Erfindung wird weiter erläutert anhand der Figuren. Alle Figuren sind schematisch, die Abmessungen und Proportionen der realen Gegenstände können von denen der Figuren abweichen.

Es gilt folgende Bezugszeichenliste:
- 1: Lichtleiter
- 1.1: Einzelfaser
- 1.2: Mantel
- 1.3: Hinterschnittbereich
- 2: Auskragung
- 3: optisches Element
- 3.1: Sammellinse
- 3.2: Streulinse
- 3.3: beliebige Strahlformung
- 4: Mischzone
- 5: Abdeckelement
- 6: Montagehülse
- 10: Stirnfläche

Es zeigen
- Figur 1:: einen Lichtleiter mit angeformtem optischen Element, das die Funktion einer Sammellinse erfüllt.
- Figur 2:: einen Lichtleiter mit angeformtem optischen Element, das die Funktion einer Streulinse erfüllt.
- Figur 3:: einen Lichtleiter mit angeformtem optischen Element, das die Funktion eines Lichtmischers erfüllt.
- Figur 4:: einen Lichtleiter mit angeformtem optischen Element, das zur Strahlanpassung dient und eine beliebige Oberflächen-Topografie aufweisen kann.
- Figur 5:: einen Lichtleiter mit angeformtem optischen Element, das durch ein Abdeckelement geschützt ist.
- Figur 6:: einen Lichtleiter mit angeformtem optischen Element und einer Montagehülse zur Ankopplung an eine Lichtquelle.
- Figur 7:: einen Lichtleiter mit angeformtem optischen Element, das durch Verrastung am Lichtleiter zusätzlich mechanisch stabilisiert ist.
- Figur 8:: ein Diagramm des Transmissionsverlaufes eines Lichtleiters in Abhängigkeit von Autoklavierzyklen.

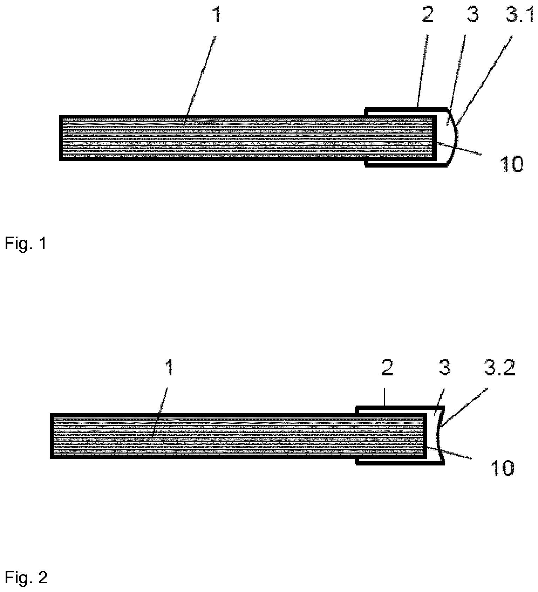

Figur 1 zeigt einen Lichtleiter 1 aus Glas der in einer Stirnfläche 10 endet, an die ein optisches Element 3 aus transparentem Kunststoff direkt oder mit einer Schicht eines Haftvermittlers angeformt ist. Der erhaltene gesamte Lichtleiter 1 ist, wie beschrieben einstückig, d.h. das optische Element 3 ist fest mit dem Glasteil des Lichtleiters 1 verbunden. Das optische Element 3 ist an seinem freien Ende so geformt, dass es die Funktion einer Sammellinse erfüllt. Das optische Element 3 weist in diesem Ausführungsbeispiel eine Auskragung 2 auf, die Teile der Seitenumfangsfläche des Lichtleiters 1 bedeckt. Auf diese Weise wird die Kontaktfläche zwischen Kunststoff und Glas des Lichtleiters 1 erhöht, wodurch höhere Abzugskräfte erreicht werden als wenn der Kunststoff des optischen Elements 3 nur an der Stirnfläche 10 des Lichtleiters 1 mit diesem in Kontakt wäre.

Die in den Figuren gezeigten Ausführungsbeispiele wurden mit dem im Folgenden beschriebenen Ansatz hergestellt. Lichtleiter 1, gebildet aus geraden, gebogenen und/ oder sich verjüngenden Faserstäben 1.1 (Multi-core-Rods, abgekürzt MCR) oder Lichtleitstäben (Singlecore-Rods, abgekürzt SCR) oder Kombinationen aus beiden Typen werden mittels eines Spritzgießverfahrens an den Enden mit einem hoch transparenten Silikon umspritzt. Dabei wird das optische Element 3 angeformt. Es wurde dabei das Verfahren des reaktiven Spritzgießen genutzt. Hierbei wird eine jeweils flüssige Komponente A und B gemischt und anschließend unter Druck in ein Werkzeug gespritzt. Die Vulkanisation erfolgt unter Hitze im Werkzeug. Typische Vulkanisationszeiten lagen bei 3 s bis 10 s pro mm Wandstärke, wobei eine höhere Temperatur zu einer schnelleren Vernetzung führt. Einzelheiten des Verfahrens sind in der betreffenden Fachliteratur beschrieben und können allgemein eingesehen werden.

Insbesondere die genannten Silikon-Materialien können hoch transparent ausgeführt sein, so dass damit optische Elemente, wie Linsen oder Lichtleitelemente hergestellt werden können. Z.B. weisen die LSR-Varianten der LSR 7000 Serie von MOMENTIVE hohe Transmissionswerte (> 90 %) und gute Beständigkeiten gegenüber UV-Licht auf. Eine weiterhin bevorzugte LSR-Variante ist der LSR-Typ LUMISIL^{®} LR 7600 der Fa. WACKER. Zudem ist eine ausreichend hohe Temperaturbeständigkeit gegeben, um auch den im Medizinbereich üblichen Aufbereitungsmethoden, wie dem Autoklavieren (z.B. 3 bar, 134° C, 10 min. Haltezeit), zu widerstehen. Zudem sind Shore-Härten im Bereich von 5 bis 90 Shore A erzielbar, so dass unterschiedliche Applikationen adressiert werden können. Damit ergibt sich ein gegenüber PMMA oder PC größeres Anwendungsgebiet, insbesondere für die Anwendung als Beleuchtungseinrichtungen im medizinischen und/oder kosmetischen Bereich. Alternativen zu den o.g. Materialien sind z.B. LSR-Varianten der Fa. DOW CORNING, welche unter dem Namen Silastic^{®} LC Serie oder MS-1002 bekannt sind.

Die Form des optischen Elements 3 wird insbesondere durch die Anforderungen an dessen strahlformende Aufgabe bestimmt. In Fig. 2 ist ein Lichtleiter 1 mit angeformtem optischen Element 3 dargestellt, welches die Funktion einer Streulinse erfüllt und daher eine konkave Lichtaustrittsfläche 3.2 aufweist. Die Sammellinsenfunktion des optischen Elements gemäß Fig. 1 bedingt eine konvexe Form der Lichtaustrittsfläche 3.1.

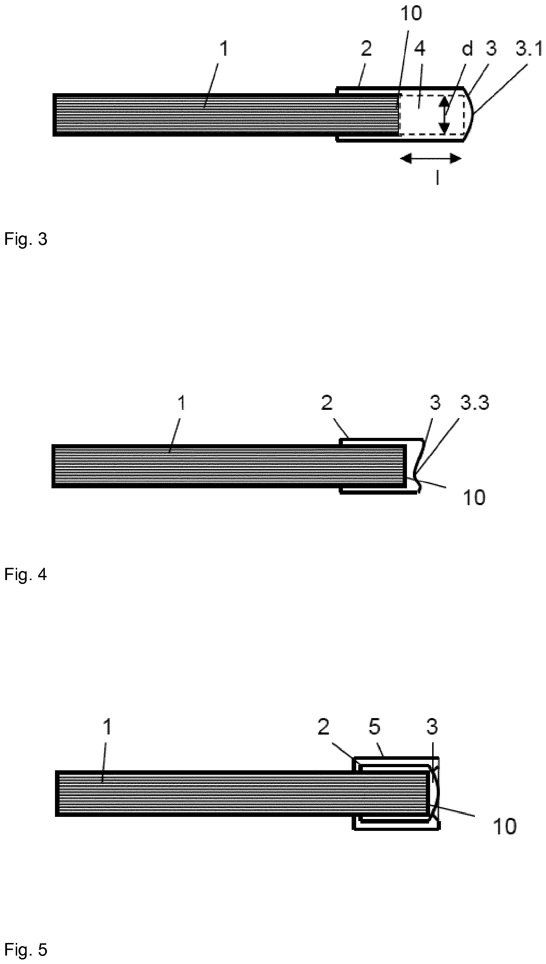

Das optische Element 3 gemäß der Figur 3 weist an seiner Lichtaustrittsfläche die Funktion einer Sammellinse 3.1 auf, davor geschaltet ist jedoch eine Mischzone 4, welche als Lichtmischer fungiert und so das, im Betriebszustand aus der Stirnfläche 10 austretende Licht homogenisiert. Auch hier kann das optische Element einteilig ausgeführt werden, d.h. dass die strahlformende Lichtaustrittsfläche 3.1 und die Mischzone 4 in einem einzigen Bauteil realisiert werden können. Zur Lichtmischung und/oder Homogenisierung in der Mischzone 4 kann es vorteilhaft sein, wenn die Mischzone einen gegenüber dem Durchmesser verlängerten Bereich (Länge I, Durchmesser d) aufweist. Vorteilhaft ist z.B. ein Verhältnis l/d > 1, idealerweise l/d > 2, wie dies Fig. 3 exemplarisch zeigt.

Das optische Element 3 kann gemäß Figur 4 ebenfalls eine beliebige Form der Austrittsfläche 3.3 aufweisen, welche durch die gewünschte Strahlformungscharakteristik bestimmt wird. Möglich sind z.B. asphärische Flächen und/oder kombinierte streuende und fokussierende Flächen. Das optische Element 3 kann auch als sich verjüngender langgezogener, flexibler Lichtleitstab ausgebildet sein.

Mit einem gezielten Einbringen von Streupartikeln in oberflächennahen Schichten des transparenten Kunststoffmaterials kann z.B. auch ein seitenemittierender Effekt erzielt werden, der es z.B. erlaubt, Zahnzwischenräume auszuleuchten. Streupartikel, die im Volumen des Kunststoffmaterials des optischen Elements 3 eingebracht werden, können auch dazu dienen, das im optischen Element 3 geleitete Licht zu homogenisieren. Beide Effekte können selbstverständlich auch zusammen eingesetzt werden.

Da das optische Element 3 durch den beschriebenen Spritzgießprozess erhalten wird, in dem die Form der Lichtaustrittsfläche durch die Negativform der Spritzgießform entsteht, ist es allenfalls erforderlich, einmal die entsprechende Form herzustellen, um dann in großen Stückzahlen Lichtleiter 1 mit den entsprechenden angeformten optischen Elementen 3 herstellen zu können. Meistens ist keine weitere Bearbeitung der Lichtaustrittsfläche des optischen Elements 3 erforderlich, bei Bedarf können jedoch selbstverständlich weitere Maßnahmen wie z.B. Polieren und/oder Aufbringen von Funktionsschichten vorgenommen werden.

Das optische Element 3 kann dabei in einem weiteren Umspritzprozess mit einer eingefärbten, vorzugsweise opaken zweiten Schicht 5 als Abdeckelement umspritzt werden, um z.B. einen seitlichen Lichtaustritt zu verhindern, das optische Element mechanisch zu schützen und/oder den Lichtleiter 1 farblich zu kennzeichnen. Ein solcher Lichtleiter 1 ist in Fig. 5 dargestellt.

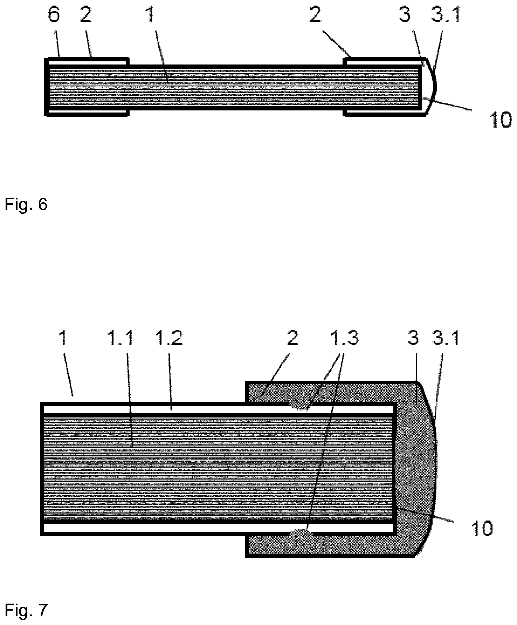

Fig. 6 zeigt, dass an die Lichteintrittsfläche des Lichtleiters 1 auch Hülsen 6 angeformt werden können, die es z.B. ermöglichen den Lichtleiter mit einer Lichtquelle zu verbinden. Durch die gegenüber Glas niedrigere Härte einer Silikonschicht als Montagehülse 6 kann mittels einer Presspassung eine weniger aufwändige Aufnahmevorrichtung konzipiert werden. Die derzeit hohen Toleranzanforderungen können damit reduziert werden, was sich positiv auf den Herstellungsaufwand auswirken kann.

Um hohe Abzugskräfte (üblicherweise mehr als 100 N) zu gewährleisten, sind zur Steigerung der Haftung zwischen Silikon und Lichtleiter 1 Haftvermittler vorteilhaft, die vor dem Umspritzprozess auf dem Lichtleiter aus Glas 1 aufgebracht werden. Dabei werden Silan-Verbindungen, sogenannte Primer, vor dem Spritzgussprozess aufgebracht. Neben einer Reinigung wird die Glasoberfläche üblicherweise vorkonditioniert, damit diese eine chemische Verbindung mit dem Silikon eingehen kann.

Eine sehr gute Haftung konnte mit einer Plasma-Vorbehandlung mit einem Atmosphärendruck-Plasma (AD-Plasma) erzielt werden. Dabei wird der Lichtleiter vor dem Umspritz-Prozess in einem bestimmten Abstand an einer Plasmaflamme vorbeigeführt und damit die Oberfläche einerseits gereinigt, Feuchtigkeit entfernt und/ oder zudem die Oberfläche aktiviert.

Damit konnten beispielsweise bei entsprechenden Faserstab-Prüfkörpern mit einem Testquerschnitt von 10 mm Durchmesser Abzugskräfte von > 200 N, typischerweise ca. 250 N erzielt werden. Die Oberfläche des Prüfkörpers wurde dabei einer AD-Plasmaflamme im Abstand von etwa 10 bis 15 mm ausgesetzt. Als Silikon-Material wurde LUMISIL^{®} LR 7600/70 der Fa. WACKER verwendet. Selbst nach 200 Autoklavierzyklen (jeweils 134° C, 3 bar, 10 min. Haltezeit) konnte gezeigt werden, dass die Haftung noch etwa 65% vom Ausgangswert betrug.

Zudem kann zur Erzielung einer formschlüssigen Verbindung ein Hinterschnittbereich 1.3 des Mantels des Lichtleiters 1 die Haftung verbessern, Dazu werden gemäß Fig. 7 kleine Einschnitte bzw. Kerben im Mantel der Lichtleiter 1 angebracht, die mit der Auskragung 2 des optischen Elements 3 aus Kunststoff verrasten.

Da aufgrund der Anwesenheit von Grenzflächen grundsätzlich eine schlechtere Lichtleitung resultiert, ist es von Vorteil, wenn ein Kernglasmaterial des Lichtleiters 1 verwendet wird, welches eine besonders gute Transmission, insbesondere im blauen Spektralbereich aufweist. Damit kann erreicht werden, dass die auftretenden Verluste an den Grenzflächen durch eine grundsätzlich bessere Transmission der Glasstäbe ausgeglichen oder gar überkompensiert werden.

Werden optische Elemente 3 angeformt, deren Kunststoff über die Stirnfläche 10 des Lichtleiters 1 auskragt und Bereiche der Außenumgangsfläche des Lichtleiters 1 bedeckt, insbesondere im Bereich anschließend an die Stirnfläche 10, können diese auf die beschriebene Weise angeformten optischen Elemente 3 noch den zusätzlichen Nutzen bieten, dass diese einen zusätzlichen mechanischen Schutz bieten. Andererseits kann durch gezielte Wahl der Shore-Härte des verwendeten LSR-Materials auch eine bestimmte Haptik erzielt werden.

Die Erfindung sieht in vorteilhafter Ausgestaltung ebenfalls vor, dass der komplette Lichtleiter mit dem Kunststoff überzogen ist, was ebenfalls wie zuvor beschrieben mittels Spritzguss realisiert werden kann. In einer dazu alternativen Verfahrensvariante kann auch vorgesehen sein, dass das optische Element 3 mittels eines Tauchbeschichtungsverfahrens an den Lichtleiter 1 angeformt wird. Dabei ist vorgesehen, dass der Lichtleiter 1 in eine Gießform mit dem Flüssigsilikon eingetaucht und anschließend getempert wird. Hiermit können dünne Überzüge auf dem Lichtleiter 1 hergestellt werden. Auch hierbei kann vorgesehen sein, die Oberfläche des Lichtleiters 1 zumindest bereichsweise mit einem Haftvermittler vorzubehandeln.

Gegenüber dem Stand der Technik haben die Lichtleiter 1 gemäß der Erfindung den Vorteil, dass durch sie auf einfache und dauerhafte Weise die Beleuchtungseigenschaften aufgrund der strahlformenden und/oder -homogenisierenden Eigenschaften des optischen Elements verbessert werden. Ebenso können die Stirnflächen aus Glas 10 mechanisch vor Beschädigungen geschützt werden. Die resultierenden Lichtleiter 1 mit angeformtem optischen Element 3 können als gesamtes Bauteil sterilisiert und/oder autoklaviert werden, so dass sie auch hohen Hygieneanforderungen genügen.

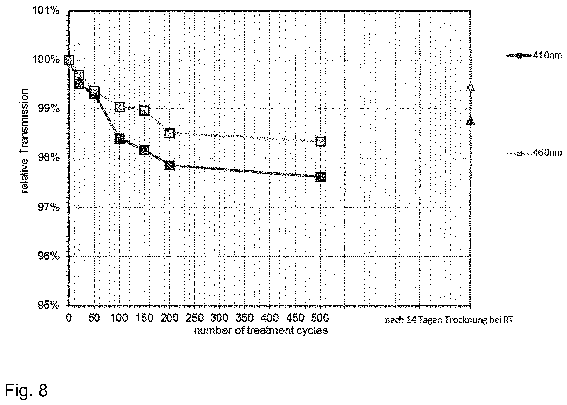

Fig. 8 zeigt beispielhaft in einem Diagramm den Transmissionsverlauf in Abhängigkeit von Autoklavierzyklen (jeweils 134° C, 3 bar, 10 min. Haltezeit). Die Lichtleiter 1 wurden dabei mit einem AD-Plasma vorbehandelt. Wie die Kurvenverläufe für eine Bestrahlung bei einer Wellenlänge von beispielsweise 460 nm und 410 nm zeigen, erfolgt lediglich ein geringfügiger Transmissionsverlust am Anfang innerhalb der ersten ca. 200 Zyklen.

Durch Trocknung bei Raumtemperatur, bei der das durch den Autoklavierzyklus eingelagerte Wasser zumindest teilweise wieder entweichen kann, konnte nach 14 Tagen dieser Transmissionsverlust teilweise wieder ausgeglichen werden. Das Ergebnis zeigt, dass damit insbesondere Aufbereitbarkeitsanforderungen für medizintechnische Applikationen, wie z.B. für den Dental-Bereich, erfüllt werden können.

## Patentansprüche

1. Lichtleiter (1) mit angeformtem optischen Element für industrielle, medizinische oder kosmetische Anwendungen, welcher zumindest in seinem Kern aus Glas besteht, mit einer Außenumfangsfläche und welcher eine Stirnfläche (10) aus Glas aufweist, wobei die Stirnfläche (10) aus Glas zum Anformen eines optischen Elements (3) aus zumindest einem transparenten Kunststoff aus der Gruppe der flüssig-Silikon-Kautschuke chemisch und/oder physikalisch vorbehandelt ist, **dadurch gekennzeichnet, dass** die Glasoberfläche durch chemische und/ oder physikalische Vorbehandlungsmethoden aktiviert wird und/oder wobei sich auf der Stirnfläche aus Glas ein Haftvermittler befindet, so dass neben einem Formschluss auch eine chemische Verbindung zwischen dem Glas der Stirnfläche (10) und dem Kunststoff des optischen Elements (3) erzeugt wird, wobei die Verbindung zwischen dem Glas der Stirnfläche (10) und dem Kunststoff des optischen Elements (3) mechanisch belastbar ist, und wobei die im Betriebszustand in dem Lichtleiter geleitete elektromagnetische Strahlung durch die Stirnfläche (10) aus Glas in den transparenten Kunststoff des optischen Elements (3) geleitet wird und wieder aus diesem austritt, und wobei das optische Element (3) derart ausgebildet ist, dass es über die Stirnfläche (10) aus Glas hinüber auskragt und zumindest Bereiche der Außenumfangsfläche des Lichtleiters (1) bedeckt.

2. Lichtleiter nach Anspruch 1, wobei die Stirnfläche (10) so vorbehandelt ist, dass Wasserfilme und organische Verunreinigungen beseitigt sind und die Stirnfläche (10) zusätzlich aktiviert ist.

3. Lichtleiter nach Anspruch 1 oder 2, wobei die Stirnfläche (10) physikalisch vorbehandelt ist.

4. Lichtleiter nach mindestens einem der Ansprüche 1 bis 3, wobei die Stirnfläche (10) durch eine Corona-Entladung oder ein Plasma vorbehandelt ist.

5. Lichtleiter nach mindestens einem der Ansprüche 1 bis 4, wobei die Stirnfläche (10) mit einer Atmosphärendruck (AD) Plasmaflamme vorbehandelt ist.

6. Lichtleiter nach mindestens einem der Ansprüche 1 bis 5, wobei zwischen der Stirnfläche (10) aus Glas und dem optischen Element (3) aus Kunststoff eine Grenzfläche Glas zu transparentem Kunststoff entsteht.

7. Lichtleiter nach mindestens einem der Ansprüche 1 bis 6, wobei der Kunststoff des anzuformenden optischen Elements (3) mit Streupartikeln versetzt ist, die im Betriebszustand eine seitliche Emission der in dem optischen Element (3) geführten elektromagnetischen Strahlung bewirken.

8. Lichtleiter nach mindestens einem der Ansprüche 1 bis 7, wobei die Außenumfangsfläche des Lichtleiters (1) Strukturen (1.3) aufweist, die in Strukturen des optischen Elements (3) und/oder eines Abdeckelements (5) greifen, so dass die erforderte Abzugskraft zum Lösen der Verbindung zwischen dem Glas der Stirnfläche (10) und dem Kunststoff des optischen Elements (3) zusätzlich erhöht wird.

9. Lichtleiter nach mindestens einem der Ansprüche 1 bis 8, wobei der Lichtleiter (1) von einem Glasstab oder einer Mehrzahl von miteinander unlösbar verbundenen Glasstäben (1.1) gebildet wird.

10. Lichtleiter nach Anspruch 9, wobei die Glasstäbe (1.1) Kern-Mantelstäbe sind.

11. Verwendung eines Lichtleiters nach mindestens einem der Ansprüche 1 bis 10 in einem Dentalbeleuchtungsgerät und/oder einem Dentalaushärtegerät und/oder in einem industriell einsetzbaren Gerät zur Kleberaushärtung und/oder in einem Otoskop, und/oder für Beleuchtungsanwendungen im Bereich Vitrinen und Möbel.

12. Verfahren zum Herstellen eines temperaturbeständigen Lichtleiters (1) mit angeformtem optischen Element (3), beinhaltend die Verfahrensschritte
- Bereitstellen des Lichtleiters (1), welcher zumindest in seinem Kern aus Glas besteht, wobei der Lichtleiter (1) eine Stirnfläche (10) aus Glas aufweist,
- chemische oder physikalische Vorbehandlung der Stirnfläche (10) aus Glas des Lichtleiters (1) in dem Bereich des Lichtleiters (1), der aus Glas besteht, **gekennzeichnet durch**
- Aktivierung der Glasoberfläche durch chemische und/oder physikalische Vorbehandlungsmethoden
- und/oder Aufbringen eines Haftvermittlers auf die Stirnfläche aus Glas des Lichtleiters (1),
- Bereitstellen einer Spritzgussform oder einer Gießform, welche die negative Kontur des optischen Elements (3) enthält,
- Bereitstellen eines transparenten Kunststoff-Precursors, aus dem das optische Element (3) gebildet wird,
- Einbringen des transparenten Kunststoff-Precursors in die Spritzgussform oder die Gießform zum Formen des optischen Elements (3),
- Anformen des optischen Elements (3) aus transparentem Kunststoff, an die Stirnfläche (10) des Lichtleiters (1), so dass eine Verbindung zwischen dem Glas der Stirnfläche (10) und dem Kunststoff des optischen Elements (3) entsteht und das optische Element (3) mechanisch belastbar an den Lichtleiter (1) angeformt ist, wobei das optische Element (3) derart ausgebildet ist, dass es über die Stirnfläche (10) aus Glas hinüber auskragt und zumindest Bereiche der Außenumfangsfläche des Lichtleiters (1) bedeckt,
- Tempern des Lichtleiters,
wobei der transparente Kunststoff des angeformten optischen Elements (3) aus der Gruppe der flüssig-Silikon-Kautschuke ausgewählt ist.

13. Verfahren nach Anspruch 12, wobei, vor dem Anformen des optischen Elements (3), zumindest die Stirnfläche (10) des optischen Elements (3) mit dem Kunststoff-Precursor bedeckt wird.

## Claims

1. A optical waveguide (1) having a moulded-on optical element, for industrial, medical or cosmetic applications, which is made of glass at least in its core, having an outer circumferential surface and having an end face (10) made of glass, wherein the glass end face (10) has been chemically and/or physically pre-treated for moulding thereto an optical element (3) from at least one transparent plastics material from the group of liquid silicone rubbers;
**characterized in that** the glass surface has been activated by chemical and/or physical pre-treatment techniques and/or wherein an adhesion promoter has been provided on said glass end face, so that in addition to a form fit, a chemical bond was also produced between the glass of the end face (10) and the plastics material of the optical element (3), said bond between the glass of the end face (10) and the plastics material of the optical element (3) being mechanically resilient; and wherein the electromagnetic radiation carried in the optical waveguide in the operating state thereof is directed through the glass end face (10) and into the transparent plastics material of the optical element (3) and emerges again from the latter; and wherein the optical element (3) is formed so as to protrude over the end face (10) made of glass and so as to cover at least portions of the outer circumferential surface of the optical waveguide (1).

2. The optical waveguide according to claim 1, wherein the end face (10) has been pre-treated so as to eliminate water films and organic contaminants and the end face (10) has been additionally activated.

3. The optical waveguide according to claim 1 or 2, wherein the end face (10) has been pre-treated physically.

4. The optical waveguide according to at least one of claims 1 to 3, wherein the end face (10) has been pre-treated by a corona discharge or by a plasma.

5. The optical waveguide according to at least one of claims 1 to 4, wherein the end face (10) has been pre-treated by an atmospheric pressure (AP) plasma flame.

6. The optical waveguide according to at least one of claims 1 to 5, wherein an interface of glass to transparent plastics material is produced between the glass end face (10) and the optical element (3) made of plastics material.

7. The optical waveguide according to at least one of claims 1 to 6, wherein the plastics material of the optical element (3) to be moulded on has scattering particles added thereto, which in the operational state cause lateral emission of the electromagnetic radiation carried in the optical element (3).

8. The optical waveguide according to at least one of claims 1 to 7, wherein the outer circumferential surface of the optical waveguide (1) has features (1.3) interlocking with features of the optical element (3) and/or of a covering element (5), so that the withdrawal force required for releasing the bond between the glass of the end face (10) and the plastics material of the optical element (3) is further enhanced.

9. The optical waveguide according to at least one of claims 1 to 8, wherein the optical waveguide (1) is defined by one glass rod or by a plurality of inseparably interconnected glass rods (1.1).

10. The optical waveguide according to claim 9, wherein said glass rods (1.1) are core-cladding rods.

11. Use of an optical waveguide according to at least one of claims 1 to 10 in a dental lighting device and/or in a dental curing device and/or in an industrially employable device for curing adhesives and/or in an otoscope and/or for lighting applications in the field of display cabinets and furniture.

12. A method for producing a heat-resistant optical waveguide (1) having a moulded-on optical element (3), comprising the method steps of:
- providing the optical waveguide (1) which is made of glass at least in its core, the optical waveguide (1) having an end face made of glass;
- chemical or physical pre-treatment of the glass end face (10) of the optical waveguide (1) in the portion of the optical waveguide which is made of glass; **characterized by**
- activating the glass surface by chemical or physical pre-treatment techniques;
- and/or applying an adhesion promoter onto the glass end face of the optical waveguide (1);
- providing an injection mould or a mould including the negative contour of the optical element (3);
- providing a precursor of transparent plastics material from which the optical element (3) is formed;
- introducing the transparent plastics material precursor into the injection mould or into the mould for moulding the optical element (3);
- moulding the optical element (3) from transparent plastics material onto the end face (10) of the optical waveguide (1) such that a bond is produced between the glass of the end face (10) and the plastics material of the optical element (3) and so that the optical element (3) is moulded onto the optical waveguide (1) in a mechanically resilient way, wherein the optical element (3) is formed so as to protrude over the glass end face (10) and so as to cover at least portions of the outer circumferential surface of the optical waveguide (1);
- heat-treating the optical waveguide;
wherein the transparent plastics material of the moulded-on optical element (3) is selected from the group of liquid silicone rubbers.

13. The method according to claim 12, wherein prior to the optical element (3) being moulded thereto, at least the end face (10) of the optical element (3) is covered with the precursor of plastics material.

## Revendications

1. Guide d'ondes optiques (1) comprenant un élément optique moulé, destiné à des applications industrielles, médicales ou cosmétiques, qui est constitué de verre, au moins dans son coeur, comportant une surface périphérique extérieure, et qui présente une face frontale (10) en verre, la face frontale (10) en verre étant soumise à un prétraitement par voie chimique et/ou physique en vue du moulage d'un élément optique (3) constitué d'au moins une matière plastique transparente du groupe des caoutchoucs de silicone liquides, **caractérisé en ce que** la surface du verre est activée par des procédés de prétraitement chimiques et/ou physiques, et/ou dans lequel un promoteur d'adhérence se trouve sur la face frontale en verre, de sorte qu'en dehors d'une complémentarité de formes, on crée également une liaison chimique entre le verre de la face frontale (10) et la matière plastique de l'élément optique (3), la liaison entre le verre de la face frontale (10) et la matière plastique de l'élément optique (3) résistant aux contraintes mécaniques, et sachant que le rayonnement électromagnétique, qui est guidé dans le guide d'ondes optiques à l'état de fonctionnement, est dirigé à travers la face frontale (10) en verre, dans la matière plastique transparente de l'élément optique (3) et ressort de celui-ci, et sachant que l'élément optique (3) est réalisé de manière telle qu'il dépasse par rapport à la face frontale (10) en verre et couvre au moins des parties de la surface périphérique extérieure du guide d'ondes optiques (1).

2. Guide d'ondes optiques selon la revendication 1, dans lequel la face frontale (10) est soumise à un prétraitement tel que des pellicules d'eau et des impuretés organiques soient éliminées et que la face frontale (10) soit soumise à une activation supplémentaire.

3. Guide d'ondes optiques selon la revendication 1 ou 2, dans lequel la face frontale (10) est soumise à un prétraitement par voie physique.

4. Guide d'ondes optiques selon au moins une des revendications 1 à 3, dans lequel la face frontale (10) est soumise à un prétraitement par décharge corona ou un plasma.

5. Guide d'ondes optiques selon au moins une des revendications 1 à 4, dans lequel la face frontale (10) est soumise à un prétraitement avec une flamme de plasma à pression atmosphérique (AD).

6. Guide d'ondes optiques selon au moins une des revendications 1 à 5, dans lequel une interface verre-matière plastique transparente est créée entre la face frontale (10) en verre et l'élément optique (3) en matière plastique transparente.

7. Guide d'ondes optiques selon au moins une des revendications 1 à 6, dans lequel sont mélangées à la matière plastique de l'élément optique (3) à mouler, des particules de diffusion qui, à l'état de fonctionnement, engendrent une émission latérale du rayonnement électromagnétique guidé dans l'élément optique (3).

8. Guide d'ondes optiques selon au moins une des revendications 1 à 7, dans lequel la surface périphérique extérieure du guide d'ondes optiques (1) présente des structures (1.3) qui s'engagent dans des structures de l'élément optique (3) et/ou d'un élément de recouvrement (5), de sorte que la force d'arrachage nécessaire pour défaire la liaison entre le verre de la face frontale (10) et la matière plastique de l'élément optique (3) est encore augmentée.

9. Guide d'ondes optiques selon au moins une des revendications 1 à 8, dans lequel le guide d'ondes optiques (1) est constitué d'une tige de verre ou d'une pluralité de tiges de verre (1.1) reliées de manière inséparable entre elles.

10. Guide d'ondes optiques selon la revendication 9, dans lequel les tiges de verre (1.1) sont des tiges à coeur et gaine.

11. Utilisation d'un guide d'ondes optiques selon au moins une des revendications 1 à 10, dans un dispositif d'éclairage dentaire et/ou un dispositif de durcissement dentaire et/ou dans un dispositif susceptible d'être utilisé à échelle industrielle en vue du durcissement d'un adhésif, et/ou dans un otoscope et/ou pour des applications d'éclairage dans le domaine des vitrines et des meubles.

12. Procédé de fabrication d'un guide d'ondes optiques (1) résistant aux températures élevées, sur lequel est moulé un élément optique (3), comprenant les étapes de procédé suivantes :
- mise à disposition du guide d'ondes optiques (1) qui est constitué de verre au moins en son coeur, le guide d'ondes optiques (1) présentant une face frontale (10) en verre,
- prétraitement par voie chimique ou physique de la face frontale (10) en verre du guide d'ondes optiques (1), dans la région du guide d'ondes optiques (1) qui est en verre,
**caractérisé en ce qu'**il comprend
- l'activation de la surface de verre par des procédés de prétraitement chimiques et/ou physiques,
- et/ou l'application d'un promoteur d'adhérence sur la face frontale en verre du guide d'ondes optiques (1),
- la mise à disposition d'un moule à injection ou d'un moule de coulée qui comporte le contour négatif de l'élément optique (3),
- la mise à disposition d'un précurseur en matière plastique transparente, à partir duquel est formé l'élément optique (3),
- la mise en place du précurseur en matière plastique transparente dans le moule à injection ou le moule de coulée, en vue du moulage de l'élément optique (3),
- le moulage de l'élément optique (3) en matière plastique transparente sur la face frontale (10) du guide d'ondes optiques (1), de manière à créer une liaison entre le verre de la face frontale (10) et la matière plastique de l'élément optique (3), et de manière à ce que l'élément optique (3) soit moulé sur le guide d'ondes optiques (1) en présentant une résistance mécanique, l'élément optique (3) étant réalisé de façon à ce qu'il dépasse par rapport à la face frontale (10) en verre et couvre au moins des parties de la surface périphérique extérieure du guide d'ondes optiques (1),
- la recuisson du guide d'ondes optiques,
la matière plastique transparente de l'élément optique (3) moulé étant choisie dans le groupe des caoutchoucs de silicone liquides.

13. Procédé selon la revendication 12, selon lequel au moins la face frontale (10) de l'élément optique (3) est recouverte avec le précurseur en matière plastique, avant le moulage de l'élément optique (3).
